# EUROPÄISCHE PATENTSCHRIFT

(11) **EP 2 280 368 B1**
(45) Veröffentlichungstag und Bekanntmachung des Hinweises auf die Patenterteilung: **09.09.2015**
(21) Anmeldenummer: 10007710.6
(22) Anmeldetag: 24.07.2010
(51) Int. Cl.: G06K 9/32, B60W 30/16, B60K 31/18, B60W 30/17

(54) **Verfahren zum Betrieb eines Kraftfahrzeuges mit einem Längsführungssystem umfassend eine Fernbereichssensorik und eine Nahbereichssensorik**
Process to operate a vehicle with a speed control system comprising a long far and near range sensors
Procédé d'opération d'un véhicule avec control de vitesse comprenant des capteurs de portée proche et lointaine

(30) Priorität: 28.07.2009 DE 102009034963
(43) Veröffentlichungstag der Anmeldung: 02.02.2011
(73) Patentinhaber: AUDI AG, 85045 Ingolstadt (DE); Audi Electronics Venture GmbH, 85080 Gaimersheim (DE)
(72) Erfinder: Limbacher, Reimund, 85055 Ingolstadt (DE); Schuberth, Stefan, 85057 Ingolstadt (DE); Duba, Georg-Peter, 85101 Lenting (DE)
(74) Vertreter: Thielmann, Frank

(56) Entgegenhaltungen:
- DE-A1-102007 036 787
- US-A1- 2003 150 417

## Beschreibung

Die Erfindung betrifft ein Verfahren zum Betrieb eines Kraftfahrzeugs mit einem Längsführungssystem umfassend eine eine Nahbereichssensorik sowie eine Fernbereichssensorik aufweisende Sensorik, über die Gegenstände im Fahrzeugvorfeld erfassbar sind, wobei das Kraftfahrzeug über das Längsführungssystem gesteuert in den Stand gebremst wird und bei Vorliegen wenigstens eines fahrerseitig zu gebenden Freigabesignals automatisch in Abhängigkeit des Erfassungsergebnisses anfährt, wobei das hinter einem über die Sensorik erfassten anderen Fahrzeug stehende Kraftfahrzeug bei Erfassung einer Anfahrt des anderen Fahrzeugs trotz gleichzeitiger Erfassung eines weiteren im Fahrzeugvorfeld befindlichen Hindernisses mit einer, verglichen mit der Beschleunigung bei einer Anfahrt mit hindernisfreiem Fahrzeugvorfeld, geringeren Beschleunigung ohne unmittelbar vorheriger fahrerseitiger Gabe eines diese Anfahrt freigebenden Anfahrsignals anfährt.

Kraftfahrzeuge mit einem solchen längsführenden Fahrerassistenzsystem, üblicherweise umfassend eine Fernbereichs- und eine Nahbereichssensorik, sind bekannt und bieten den Vorteil, dass der Fahrer beispielsweise im Kolonnenverkehr entlastet wird, nachdem das Fahrzeug automatisch bis in den Stand gebremst und im Stand auch festgebremst gehalten werden kann. Bekannt ist auch, das Fahrzeug wieder automatisch anzufahren, wenn sich das vorausfahrende Fahrzeug in Bewegung gesetzt hat, was über die Sensorik, primär die Nahbereichssensorik, nachdem das Fahrzeug in geringem Abstand vor dem eigenen Kraftfahrzeug steht, ermittelt wird. Erforderlich hierfür ist nach Erfassen der Anfahrt des vorausfahrenden Fahrzeugs, dass der Fahrer ein über eine Eingabeeinrichtung, beispielsweise einen Bedienhebel oder dergleichen zu gebendes Betätigungssignal gibt. Hierzu kann beispielsweise der Bedienhebel des ACC-Systems (ACC = adaptive cruise control), also des Längsführungssystems selbst, verwendet werden, dort beispielsweise die SET- oder die RESUME-Taste.

Bei bekannten Kraftfahrzeugen bzw. Längsführungssystemen wird eine Bediensignalgabe vor Erfassen einer Anfahrt des vorausfahrenden Fahrzeugs nicht berücksichtigt, vielmehr muss dort stets die Anfahrt des Vorderfahrzeugs erfasst worden sein. Der Fahrer ist deshalb genötigt, stets aufmerksam das Vorderfahrzeug zu beobachten. Ist der Fahrer unaufmerksam, so kommt es häufig vor, dass er die Anfahrt des Vorderfahrzeugs erst relativ spät bemerkt, so dass es bis zur eigenen Anfahrt zur Bildung einer relativ großen Lücke im Verkehrsfluss kommt. Dies ist für die hinteren Fahrzeuge nachteilig, als sich die Kolonne immer weiter verlängert.

Ein demgegenüber verbessertes Kraftfahrzeug bzw. Längsführungssystem und ein entsprechendes Betriebsverfahren ist aus DE 10 2007 039 375 A1 bekannt. Dort wird ein innerhalb eines vorbestimmten Zeitintervalls vor der tatsächlichen Anfahrterfassung des Vorderfahrzeugs gegebenes Bediensignal als Freigabesignal für die automatische Anfahrt gewertet, wobei dieser Zeitraum bis zu 60s und mehr betragen kann. Dies bietet dem Fahrer die Möglichkeit, ein Freigabesignal lange vor der tatsächlichen Anfahrt des Vorderfahrzeugs zu geben, woraufhin, sofern innerhalb des Zeitfensters die Anfahrt des Vorderfahrzeugs erfasst wird, das eigene Fahrzeug sich automatisch in Bewegung setzt. Der Fahrer ist also nicht mehr genötigt, ständig das Vorderfahrzeug zu beobachten, selbst wenn der Fahrer abgelenkt ist, ist die automatische Anfahrt sichergestellt. Eine Grundlage hierfür ist bei dem System aus DE 10 2007 039 375 A1, dass eine geeignete Einrichtung zur Hinderniserkennung vorgesehen ist, die im Nahbereich bzw. im nahen Fahrzeugvorfeld etwaige Hindernisse, die sich in der Zeit zwischen Gabe des Bestätigungssignals und der Erfassung der Anfahrt des Vorderfahrzeugs dort aufhalten oder dort hineinbegeben, erfasst. Im Falle einer Hinderniserfassung wird der automatische Anfahrbetrieb unterbunden, d. h., dass selbst bei Erfassung einer Anfahrt des Vorderfahrzeugs innerhalb des Zeitfensters das eigene Fahrzeug infolge des erfassten Hindernisses nicht anfährt. Dies erst, wenn entweder das Hindernis nicht mehr vorhanden ist, oder ein erneutes Bestätigungssignal gegeben wurde.

Hieraus resultiert nun aber das Problem, dass sich der Fahrer, der das Bestätigungssignal viele Sekunden vor der eigentlichen tatsächlichen Anfahrt des Vorderfahrzeugs gegeben hat, letztlich auf die volle Funktionsfähigkeit der Hinderniserfassungseinrichtung verlässt. D. h., dass er nach Aktivierung der automatischen Anfahrt davon ausgeht, dass in jedem Fall bei Eindringen eines Hindernisses in das Fahrzeugvorfeld dieses erfasst wird und der automatische Anfahrbetrieb unterbunden wird. Dieses komplette Verlassen auf das System respektive die Hindernissensorik verleitet den Fahrer nun dazu, in deutlichen höherem Maß unaufmerksam zu sein, wenngleich die Situation letztlich immer eine gewisse Aufmerksamkeit erfordert. Denn wenngleich Überwachungseinrichtungen zur Hinderniserfassung sehr gut arbeiten und Hindernisse relativ zuverlässig erkennen, kann dennoch nicht von einer 100 %igen Hinderniserkennung ausgegangen werden. D. h., dass bei der Hinderniserfassung durchaus mit einer Fehlerquote im Prozentbereich zu rechnen ist. Wird nun versehentlich ein Hindernis nicht erkannt und fährt das eigene Fahrzeug, dem Beschleunigungsvorgang des vorausfahrenden Fahrzeugs letztlich nachfolgend, mit hinreichender Beschleunigung an, so kann es, nachdem der Fahrer unaufmerksam war respektive sich auf das System verlassen hat, gleichwohl zu einer Kollision mit dem Hindernis kommen.

Aus der Druckschrift DE 10 2007 036 787 A1 ist ein Abstandsregler mit automatischer Anhalte- und Anfahrfunktion bekannt. Dieser umfasst einen abstandsmessenden Fernbereichssensor und einen abstandsmessenden Ultraschallsensor. Wird bei einem möglichen Anfahren des Kraftfahrzeugs mit Hilfe der Ultraschallsensoren festgestellt, dass sich ein Hindernis unmittelbar vor dem Kraftfahrzeug befindet, fährt das Kraftfahrzeug dennoch an, wobei die Längsführung auf Grundlage des Ultraschallsensorsystems erfolgt, der Anfahrvorgang jedoch mit geringerer Dynamik gesteuert wird.

Der Erfindung liegt damit das Problem zugrunde, ein Verfahren zur Längsführung eines Kraftfahrzeugs anzugeben, das für den Fahrer komfortabel ist, ihn gleichwohl aber in den Betrieb mit einbindet.

Zur Lösung dieses Problems ist bei einem Verfahren der eingangs genannten Art erfindungsgemäß vorgesehen, dass das automatische Anfahren unterdrückt wird, wenn die Nahbereichssensorik defekt oder nicht einsatzbereit ist.

Anders als bei allen bekannten Verfahren fährt das Kraftfahrzeug beim erfindungsgemäßen Verfahren auch dann an, wenn die Überwachungssensorik ein Hindernis im Fahrzeugvorfeld detektiert hat. Die Anfahrt erfolgt jedoch nicht mit der Beschleunigung, mit der das Fahrzeug anfahren und dem Vorderfahrzeug folgen würde, wenn kein Hindernis erfasst worden wäre, sondern mit einer demgegenüber deutlich reduzierten Beschleunigung, d. h., das Fahrzeug rollt langsam und vorsichtig an, beschleunigt also nur sehr moderat. Allein durch den haptischen Anfahrruck wird der abgelenkte Fahrer automatisch wieder das Geschehen beobachten, d. h., seine Aufmerksamkeit würde wieder nach vorne gelenkt. Aufgrund der reduzierten geringen Beschleunigung ist nun hinreichend Zeit gegeben, dass der Fahrer selbst die Entscheidungsfindung vornehmen kann, einzugreifen, sofern dies erforderlich ist, mithin also die Fahrzeugführung wieder zu übernehmen. D. h., dass der Fahrer, auch wenn das Freigabesignal lange, beispielsweise 20s oder 30s vor der tatsächlichen Anfahrt und zeitlich zu dieser völlig unabhängig gegeben wurde, zum einen weiß, dass er sich keinesfalls auf das System in dergestalt verlassen kann, dass eine Anfahrt bei erfasstem Hindernis nicht erfolgt. Vielmehr weiß er, dass das Fahrzeug in jedem Fall, wenngleich verzögert, anrollt. Zum anderen steht dem Fahrer auch hinreichend Zeit zur Verfügung, um selbst einreifen zu können. Dies gilt insbesondere, wenn die Anfahrt nach erfolgter oder unter gleichzeitiger Gabe eines das Vorhandensein eines Hindernis anzeigenden Warnsignals, beispielsweise eines akustischen oder optischen Warnsignals, erfolgt. Hierüber wird dem Fahrer nicht nur aufgrund des haptischen Anfahrrucks respektive aufgrund seines Wissens, dass er sich nicht vollständig auf das System verlassen kann, die Möglichkeit zur Übernahme des Fahrzeugs gegeben, sondern zusätzlich durch eine Warnsignalgabe unterstützt. Gleichwohl stellt das erfindungsgemäße Verfahren für den Fahrer eine Vereinfachung respektive bessere Bedienbarkeit zur Verfügung, nachdem er zum einen die Möglichkeit hat, das Freigabesignal relativ lange und zeitlich unabhängig vor der eigentlichen Anfahrt bzw. Erfassung der Anfahrt des Vorderfahrzeugs zu geben. Zum anderen ist, anders als beispielsweise in DE 10 2007 039 375 gefordert, nicht ein erneutes Anfahrsignal zu geben, wenn ein Hindernis erfasst wird, um die Anfahrt überhaupt auszulösen. Der Fahrer ist also letztlich beim erfindungsgemäßen Verfahren immer mit in die Überwachung des Anfahrvorgangs einbezogen bzw. wird zwangsläufig einbezogen, und es wird ihm zumindest soviel Zeit verschafft, um selber die Entscheidung zur Fahrzeugübernahme treffen bzw. das Hindernis erkennen zu können.

Wie bereits beschrieben, wird die Anfahrt besonders vorteilhaft durch Gabe eines akustischen und/oder optischen Warnsignals unterstützt. Dieses Warnsignal, insbesondere ein optisches Warnsignal, kann in Weiterbildung der Erfindung solange auch nach erfolgter Anfahrt gegeben werden, bis das Hindernis nicht mehr von der Nahbereichssensorik erfasst wird.

Gemäß einer ersten Erfindungsalternative kann das Kraftfahrzeug unmittelbar nach Ablauf einer auch bei Anfahrt mit hindernisfreiem Fahrzeugvorfeld geltenden Wartezeit anfahren. Üblicherweise fährt im automatischen Anfahrbetrieb das eigene Fahrzeug dann an, wenn eine gewisse definierte Wartezeit nach Erfassung der Anfahrt des Vorderfahrzeugs abgelaufen ist. Die gleiche Wartezeit kann nun auch der erfindungsgemäßen Anfahrt des eigenen Fahrzeugs mit reduzierter Beschleunigung, weil ein Hindernis erkannt wurde, zugrunde gelegt werden. Eine Verfahrensalternative hierzu sieht vor, dass das Kraftfahrzeug erst nach Ablauf einer die bei Anfahrt mit hindernisfreiem Fahrzeugvorfeld geltende Wartezeit verlängernde weiteren Zusatzwartezeit anfährt. D. h., dass das eigene Fahrzeug bei dieser Erfindungsausgestaltung etwas länger steht, bis es anfährt. In Verbindung mit der Gabe eines akustischen und/oder optischen Warnsignals nach erfolgert Hinderniserfassung, die vor der eigentlichen Anfahrt mit reduzierter Beschleunigung aufgrund der Erfassung des vorhandenen Hindernisses erfolgt, steht dem Fahrer noch etwas mehr Zeit zur Entscheidungsfindung zur Verfügung.

Das Freigabesignal, das der Fahrer lang vor der Erfassung der Anfahrt des Vorderfahrzeugs zur Aktivierung der automatischen Anfahrt geben kann, kann eine Gültigkeitsdauer von wenigstens 15s, insbesondere von wenigstens 20s besitzen. Auch längere Gültigkeitsdauern von 30 - 60s sind denkbar.

Schließlich kann unabhängig von der Erfassung einer Anfahrt des vor dem eigenen Kraftfahrzeugs stehenden Fahrzeugs bei Erfassung eines Hindernisses stets ein Warnsignal ausgegeben werden. Steht also das Vorderfahrzeug und das eigene Kraftfahrzeug, und bewegt sich ein Hindernis in das eigene Fahrzeugvorfeld, so kann in jedem Fall ein Warnsignal gegeben werden, um den Fahrer darauf aufmerksam zu machen. Die Warnsignalgabe kann entweder nur dann erfolgen, wenn der Fahrer bereits das Freigabesignal beispielsweise durch Betätigen der SET- oder RESUME-Taste gegeben hat, da nur dann ein automatischer Anfahrbetrieb aktiviert ist. Sofern die Gabe eines separaten Freigabesignals nach einem Stopp nicht erforderlich ist, sondern zu Beginn des automatischen Längsführungsbetriebs ein einziges Freigabesignal für den gesamten nachfolgenden automatischen Betrieb ausreichend ist, würde das Warnsignal ohnehin stets gegeben.

Das erfindungsgemäße Verfahren führt bei Vorliegen eines Freigabesignals also auch bei Erfassung eines Hindernisses im Fahrzeugvorfeld stets zu einer Anfahrt, der jedoch eine gegebenenfalls auch zeitverzögerte reduzierte, geringere Beschleunigung zugrunde liegt. Das automatische Anfahren wird nur dann grundsätzlich unterdrückt, wenn die Sensorik, nämlich die Nahbereichssensorik defekt ist oder nicht einsatzbereit ist, beispielsweise wenn Nahbereichs-Ultraschallsensoren blind sind, oder wenn im Falle einer Nahbereichssensorik umfassend eine das Fahrzeugvorfeld aufnehmende Videokamera, deren Bilder analysiert werden, die Kamera nicht arbeitet. Denn in diesem Fall ist die Hinderniserfassung grundsätzlich nicht möglich. Eine Unterdrückung der automatischen Anfahrt kann auch dann erfolgen, wenn beispielsweise der Fahrergurt im Stillstand geöffnet ist, oder wenn eine Fahrzeugtür, insbesondere die Fahrertür geöffnet ist. Weitere Randbedingungen, die zu einer Unterdrückung der automatischen Anfahrt führen, sind denkbar.

Neben dem Verfahren betrifft die Erfindung ferner ein Kraftfahrzeug, das zur Durchführung des Verfahrens nach einem der vorangehenden Ansprüche geeignet ist, mit einem Längsführungssystem umfassend eine Steuerungseinrichtung und eine eine Nahbereichssensorik sowie eine Fernbereichssensorik aufweisende Sensorik, über die Gegenstände im Fahrzeugvorfeld erfassbar sind, wobei das Kraftfahrzeug über das Längsführungssystem gesteuert in den Stand gebremst wird und bei Vorliegen wenigstens eines fahrerseitig zu gebenden Freigabesignals automatisch in Abhängigkeit des Erfassungsergebnisses anfährt, wobei die Steuerungseinrichtung zur Steuerung der Anfahrt des Kraftfahrzeugs derart ausgebildet ist, dass das hinter einem über die Sensorik erfassten anderen Fahrzeug stehende Kraftfahrzeug bei Erfassung einer Anfahrt des anderen Fahrzeugs trotz gleichzeitiger Erfassung eines weiteren im Fahrzeugvorfeld befindlichen Hindernisses mit einer, verglichen mit der Beschleunigung bei einer Anfahrt mit hindernisfreiem Fahrzeugvorfeld, geringeren Beschleunigung ohne unmittelbar vorheriger fahrerseitiger Gabe eines diese Anfahrt freigebenden Anfahrsignals anfährt, wobei das automatische Anfahren unterdrückt ist, wenn die Nahbereichssensorik defekt oder nicht einsatzbereit ist. Die Steuereinrichtung, das zentrale Steuerelement für das Längsführungssystem, verfügt über geeignete Steuerungs- und Verarbeitungsprogramme, die einerseits zur Erkennung und Erfassung eines Hindernisses durch Auswertung der Sensorsignale oder beispielsweise der Kameravideobilder des Fahrzeugsvorfelds zur Hinderniserfassung erforderlich sind, und die andererseits die Steuerung des Antriebsaggregats auf Basis einer Kennlinie mit reduzierter Beschleunigung ermöglichen.

Weiterhin kann wenigstens eine über die Steuerungseinrichtung gesteuerte Signalgabeeinrichtung zur Gabe eines Warnsignals vorgesehen sein, wobei die Steuerungseinrichtung derart ausgebildet ist, dass die Anfahrt nach erfolgter oder unter gleichzeitiger Gabe eines das Vorhandensein eines Hindernis anzeigenden Warnsignals erfolgt. Als Signalgabeeinrichtung ist zweckmäßigerweise eine optische Einrichtung und/oder eine akustische Einrichtung vorgesehen, wobei im Bedarfsfall auch beide Signal gegeben werden.

Weiterhin kann die Steuerungseinrichtung zur Durchführung der Anfahrt unmittelbar nach Ablauf einer auch bei Anfahrt mit hindernisfreiem Fahrzeugvorfeld geltenden Wartezeit ausgebildet sein. Alternativ kann die Steuerungseinrichtung die Anfahrt auch erst nach Ablauf einer weiteren die bei Anfahrt mit hindernisfreiem Fahrzeugvorfeld geltende Wartezeit verlängernden Zusatzwartezeit ansteuern.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahrzeugs,
- Fig. 2: eine Prinzipdarstellung einer Verkehrssituation mit im Fahrzeugvorfeld befindlichen Hindernissen,
- Fig. 3: ein Diagramm zur Darstellung des zeitlichen Ablaufs einer automatischen Wiederanfahrt nach einer ersten Alternative, und
- Fig. 4: ein Diagramm zur Darstellung des zeitlichen Ablaufs einer automatischen Wiederanfahrt gemäß einer zweiten Alternative.

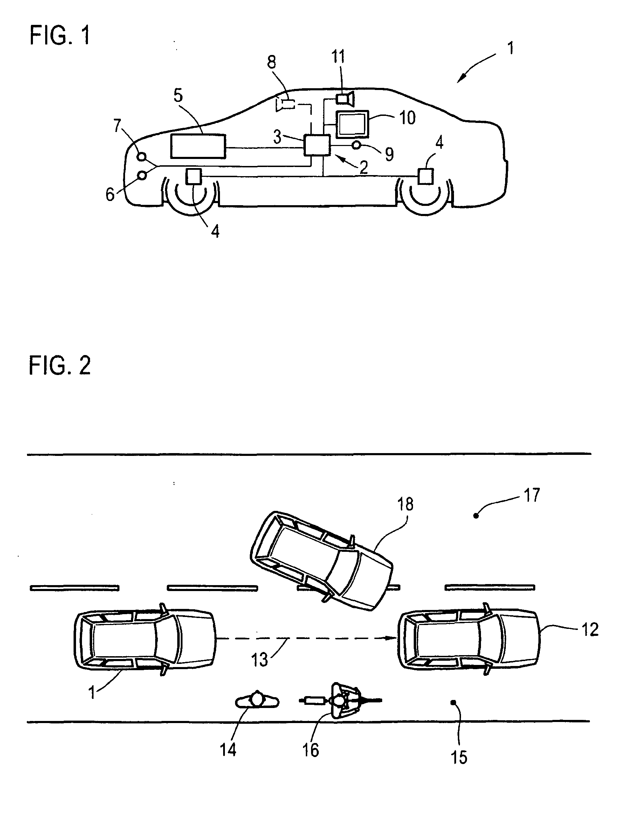

Fig. 1 zeigt ein erfindungsgemäßes Kraftfahrzeug 1, umfassend ein Längsführungssystem 2, beispielsweise in Form eines ACC-Systems, mit einem Steuergerät 3, welches Längsführungssystem 2 in der Lage ist, das Kraftfahrzeug automatisch in den Stand zu bremsen sowie automatisch wieder anzufahren. Diese Möglichkeiten sind exemplarisch dargestellt, indem das Steuergerät 3 mit den Bremseinrichtungen 4 der Vorder- und Hinderräder sowie dem Motor/Getriebe 5 des Fahrzeugs 1 kommuniziert. Selbstverständlich erfolgt hier keine direkte Kommunikation, sondern eine Kommunikation mit den entsprechenden zugeordneten Steuergeräten, was aus Übersichtlichkeitsgründen hier jedoch nicht näher dargestellt ist.

Das Längsführungssystem verfügt über eine Sensorik zur Erfassung des Fahrzeugvorfelds, hier z. B. umfassend eine Fernbereichssensorik 6, hier in Form von an der Fahrzeugfront befindlichen Sensoren z. B. Radar- oder Lidarsensoren, die das Fahrzeugvorfeld im Fernbereich erfassen und Informationen liefern, aus denen seitens des Steuergeräts 3 der Abstand zu einem vorausfahrenden Fahrzeug ermittelt werden kann. Ferner umfasst die Sensorik im gezeigten Beispiel eine Nahbereichssensorik 7, beispielsweise umfassend oder in Form von Ultraschallsensoren, die das nahe Fahrzeugvorfeld erfassen und ebenfalls der Ermittlung etwaiger befindlicher Hindernisse dienen. Lediglich exemplarisch ist als zusätzliche oder alternative Sensorik, insbesondere Nahbereichssensorik noch eine Kamera 8 vorgesehen, die mit der Steuerungseinrichtung 3 kommuniziert. Die Steuerungseinrichtung 3 kann das Fahrzeugvorfeld im Nahbereich auf etwaige Hindernisse durch entsprechende Auswertung der fortlaufend mit der Kamera 8 aufgenommenen zweidimensionalen Videobilder ermitteln. Das Steuergerät 3 ist gestützt auf die von den jeweiligen Sensoriken gegebenen Signale oder Informationen in der Lage, ausgehend von der Ermittlung des Abstands zum Vorderfahrzeug, insbesondere ermöglicht über die Fernbereichssensorik 6, zu bestimmen, ob das vorausfahrende Fahrzeug bremst oder beschleunigt, um dann in entsprechender Weise auch das eigene Kraftfahrzeug entsprechend abzubremsen oder zu beschleunigen, also den Abstand zum vorausfahrenden Fahrzeug zu regeln. Die grundsätzliche Funktionsweise eines solchen ACC-Systems ist hinlänglich bekannt und bedarf keiner näheren Erläuterung.

Ferner ist eine Eingabeeinrichtung 9, z. B. in Form eines Bedienhebels oder einer Taste vorgesehen, welche Eingabeeinrichtung 9 Teil des Längsführungssystems 2 ist. Über diese Eingabeeinrichtung 9 muss der Fahrer zur Ermöglichung einer automatischen Anfahrt des in den Stand gebremsten Kraftfahrzeugs 1 ein Bestätigungssignal geben, um diese automatische Anfahrt zu aktivieren. Denkbar ist es auch, dass zu Beginn eines automatischen Regelungsbetriebes lediglich ein einziges mal ein solches Freigabesignal zu geben ist, das dann Gültigkeit für den gesamten nachfolgenden Regelungsbetrieb besitzt, sofern beispielsweise etwaige Stopps in der Kolonne beispielsweise nicht länger als 60s dauern. Dargestellt sind ferner verschiedene Signalgabeeinrichtungen 10 und 11, wobei es sich bei der Signalgabeeinrichtung 10 um eine optische Signalgabeeinrichtung, beispielsweise einen fahrzeugseitig in der Regel verbauten Anzeigemonitor und bei der Signalgabeeinrichtung 11 um im Fahrzeug verbaute Lautsprecher oder ein Lautsprechersystem handelt, über welche entsprechende Informationen über den Aktivierungszustand oder den aktivierten Betriebsmodus des Längsführungssystems 2 wie auch entsprechende Warnsignale gegeben werden können, worauf nachfolgend noch eingegangen wird.

Beim erfindungsgemäßen Kraftfahrzeug 1 ist es nun möglich, über die Eingabeeinrichtung 9 ein Signal zu geben, das erst zu einem späteren Zeitpunkt als das die automatische Anfahrt ermöglichende Betätigungssignal seitens der Steuerungseinrichtung 3 gewertet wird, so dass diese das eigene Kraftfahrzeug unmittelbar mit Erfassen der Anfahrt des vorausfahrenden Fahrzeugs selbst anfahren kann. Diese Anfahrt erfolgt selbst dann, wenn über eine der Sensoriken, insbesondere die Nahbereichssensorik 7 respektive die ebenfalls der Nahbereichssensorik dienende Kamera 8, ein im unmittelbaren Fahrzeugvorfeld befindliches Hindernis erfasst wird.

Eine solche Situation mit verschiedenen möglichen Hindernissen ist exemplarisch in Fig. 2 dargestellt. Fig. 2 zeigt zum einen das eigene Kraftfahrzeug 1 sowie ein davor befindliches Fahrzeug 12. Wie durch den gestrichelten Pfeil 13 dargestellt ist, hat das Längsführungssystem 2 über eine seiner Sensoriken das Fahrzeug 12 erfasst, d. h., dass das Längsführungssystem den Betrieb des eigenen Kraftfahrzeugs 1 in Bezug auf das Fahrzeug 12 regelt. Es sei angenommen, dass das Fahrzeug 12 in den Stand gebremst hat, woraufhin das Längsführungssystem 2 das eigene Kraftfahrzeug 1 ebenfalls automatisch in den Stand gebremst hat. Fährt nun das Fahrzeug 12 wieder an und liegt seitens des eigenen Kraftfahrzeugs 1 ein über das Bedienelement 9 gegebenes Freigabesignal vor, so würde, sofern im Fahrzeugvorfeld, also dem Bereich vor dem eigenen Kraftfahrzeug 1 bis zum Heck des Fahrzeugs 12 kein Hindernis wäre, das eigene Fahrzeug 1 automatisch angefahren, wobei dieser Anfahrt eine Beschleunigungskennlinie zugrunde liegt, die in Abhängigkeit der Beschleunigung des Fahrzeugs 12 gewählt wird respektive eingestellt wird. Denn das Längsführungssystem dient bekanntlich dazu, das Kraftfahrzeug 1 automatisch dem Fahrzeug 12 nachzuführen und den Abstand entsprechend zu regeln.

Sofern nun aber ein etwaiges Hindernis im Fahrzeugvorfeld vor dem Kraftfahrzeug 1 erfasst wird, gestaltet sich der Regelungsbetrieb anders. In Fig. 2 ist beispielhaft ein erstes Hindernis in Form eines Fußgängers 14 gezeigt, der auf die Fahrbahn 15 läuft. Gezeigt ist ferner exemplarisch ein zweites mögliches Hindernis in Form eines Fahrrad- oder Motorradfahrers 16, der sich im Fahrzeugvorfeld befindet und den das Längsführungssystem nicht als Regelungsfahrzeug erfasst hat. Weiterhin ist ein drittes mögliches Hindernis in Form eines weiteren von der Parallelfahrbahn 17 einscherendes Fahrzeug 18 gezeigt, das in das Fahrzeugvorfeld einfährt. Jedes dieser drei Hindernisse wird über die Sensorik, hier primär die Nachbereichssensorik 7 respektive die Kamera 8, die das Fahrzeugvorfeld sehr breit erfassen, erfasst. Das jeweilige Hindernis betritt den Erfassungsbereich respektive das Fahrzeugvorfeld bereits zur einem Zeitpunkt, zu dem das Fahrzeug 12 noch nicht angefahren ist. Wird nun die Anfahrt des Fahrzeugs 12 erfasst, so fährt das eigene Kraftfahrzeug 1 gegebenenfalls nach Ablauf einer Wartezeit ebenfalls an, obgleich ein etwaiges Hindernis im Fahrzeugvorfeld vorhanden ist. Diese Anfahrt erfolgt jedoch nicht auf Grundlage einer Beschleunigungskennlinie, die auf das reale Beschleunigungsverhalten des Fahrzeugs 12 abgestellt ist, sondern gestützt auf eine eine geringere Beschleunigung vorgebende Kennlinie, d. h., dass das eigene Fahrzeug 1 infolge des Vorhandenseins eines Hindernisses sehr langsam und moderat beschleunigend anfährt. Infolge dieser moderaten, geringen Beschleunigung wird dem Fahrer, gegebenenfalls in Verbindung mit der Gabe eines Warnsignals, das das Vorhandensein eines Hindernisses anzeigt, dem Fahrer hinreichend Zeit verschafft, die Gefahr zu erkennen und selber die Führung zu übernehmen, beispielsweise zu bremsen oder durch Lenkeingriff dem Hindernis auszuweichen etc.

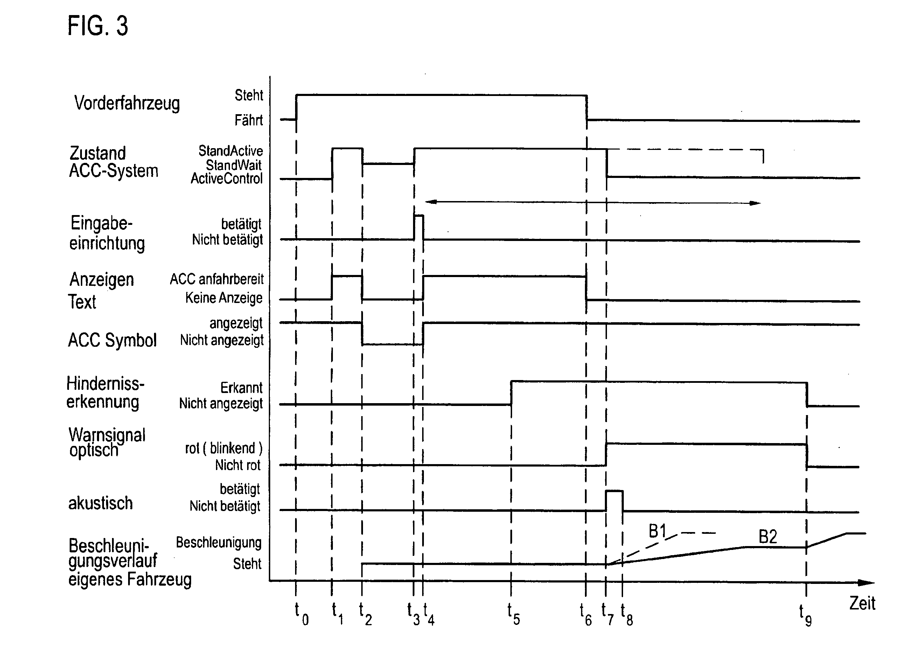

Diese Funktionalität ist in Form eines Diagramms in Fig. 3 dargestellt. Längs der Abszisse ist die Zeit aufgetragen, anhand der einzelnen Kurven sind die jeweiligen Betriebsmodi für die unterschiedlichen in das Verfahren eingebundenen Komponenten dargestellt. Dargestellt sind folgende Informationen:

Bewegungskurve des Vorderfahrzeugs, Zustand des eigenen ACC-Systems, Betätigung der Eingabeeinrichtung, die optische Anzeige betreffend den ACC-Systemzustand (Textanzeige und Symbol), die Hinderniserkennung, die Gabe eines optischen und akustischen Warnsignals, und der Beschleunigungsverlauf des eigenen Fahrzeugs.

Im Zeitpunkt t₀ sei angenommen, dass das vorausfahrende Fahrzeug, bezug nehmend auf Fig. 2 das Fahrzeug 12, anhält. Das über das ACC-System geregelte eigene Kraftfahrzeug 1 fährt noch etwas auf und ist im Zeitpunkt t₁ ebenfalls in den Stand gebremst. Der ACC-Systemzustand wechselt vom Zustand der aktiven Längsführung (active control) in den aktivierten Zustand (stand active) in dem das System im Stand aktiviert ist. Gleichzeitig ändert sich die Textanzeige zum ACC-System auf "ACC anfahrbereit". Im Zeitpunkt t₂ schaltet das ACC-System automatisch in den Wartezustand (stand wait), gleichzeitig erlischt die Textanzeige "ACC anfahrbereit", auch das bis dato angezeigte ACC-Symbol erlischt.

Im Zeitpunkt t₃ gibt der Fahrer über die Eingabeeinrichtung das Freigabesignal, er betätigt also beispielsweise eine hierfür erforderliche Taste oder dergleichen. Das ACC-System geht unmittelbar wieder in den aktivierten Zustand (stand active) über, im Zeitpunkt t₄, der unmittelbar dem Zeitpunkt t₃ folgt, erscheint auch wieder die Textanzeige "ACC anfahrbereit", auch das ACC-Symbol wird wieder angezeigt. D. h., dass das ACC-System nun für eine vorbestimmte Zeitdauer, die durch den Doppelpfeil, der der "Kurve" der "Eingabeeinrichtung" zugeordnet ist, angezeigt ist (z. B. maximal 60s), aktiviert ist, im Falle einer Anfahrerkennung kann das eigene Fahrzeug also automatisch anfahren.

Im Zeitpunkt t₅ wird nun über die Hinderniserkennung, also beispielsweise über die Nahbereichssensorik, ein Hindernis im Fahrzeugvorfeld, beispielsweise ein Fußgänger 14 oder ein Radfahrer 16 oder aber das in Fig. 2 dargestellte einscherende Fahrzeug 18, erkannt. Das Vorderfahrzeug 12 steht zu diesem Zeitpunkt noch, dessen Anfahrt wird erst im Zeitpunkt t₆ erfasst. Nach Ablauf einer kurzen Zeitspanne, die vorgegeben ist, schaltet das ACC-System automatisch in den aktiven Regelungszustand (active control) um und übernimmt die automatische Längsführung. Zum selben Zeitpunkt wird zum einen ein optisches Warnsignal, beispielsweise eine rote Blinkleuchte oder ein rotes blinkendes Feld im Anzeigedisplay wie auch ein akustisches Signal über einen Lautsprecher oder dergleichen ausgegeben, wobei zeitlich gesehen das akustische Signal nur relativ kurz ist, während das optische Signal relativ lange gegeben wird. Hierüber wird der Fahrer über das vorhandene Hindernis informiert. Ebenfalls zum gleichen Zeitpunkt t₇ veranlasst das ACC-System die automatische Anfahrt des eigenen Kraftfahrzeugs, wobei dieser automatischen Anfahrt die Beschleunigungskurve B2 zugrunde liegt. Diese Beschleunigungskurve ist ersichtlich wesentlich flacher, d. h., dass die Beschleunigung selbst wesentlich moderater und geringer ist, verglichen mit der Beschleunigungskurve B1, die gepunktet eingezeichnet ist, und die der Beschleunigung zugrunde liegen würde, wenn kein Hindernis erfasst worden wäre, nachdem dann das Fahrzeug 1 der Beschleunigung des vorausfahrenden Fahrzeugs folgen würde. Das eigene Fahrzeug wird also wesentlich langsamer anfahren und beschleunigen, um dem Fahrer Zeit zu geben, selbst die Fahrzeugführung zu übernehmen, was im Hinblick auf das erfasste Hindernis möglicherweise erforderlich ist. Hierzu wird er zum einen über die optischen und akustischen Warnsignale informiert respektive zur Fahrerübernahme aufgefordert, zum anderen wird seine Aufmerksamkeit ganz grundsätzlich auf das Geschehen vor ihm durch den auch bei geringer Beschleunigung gegebenen Anfahrruck gelenkt. Sofern der Fahrer nun entscheidet, dass kein Eingreifen erforderlich ist, so wird mit der moderaten Beschleunigung B2 solange weiterbeschleunigt, bis im Zeitpunkt t₉ das Hindernis nicht mehr im Erfassungsbereich ist, mithin also nicht mehr über die Sensorik erfasst wird und keine Kollisionsgefahr gegeben ist. Zu diesem Zeitpunkt erlischt auch das gegebene optische Warnsignal. Ab diesem Zeitpunkt kann wieder stärker beschleunigt werden um dem Fahrzeug 12 zu folgen. Für den Fall jedoch, dass der Fahrer ein Eingreifen für nötig erachtet, wird er sofort die Bremse treten, woraufhin letztlich der automatische Längsführungsbetrieb unterbrochen wird, oder eine Lenkbewegung durchführen.

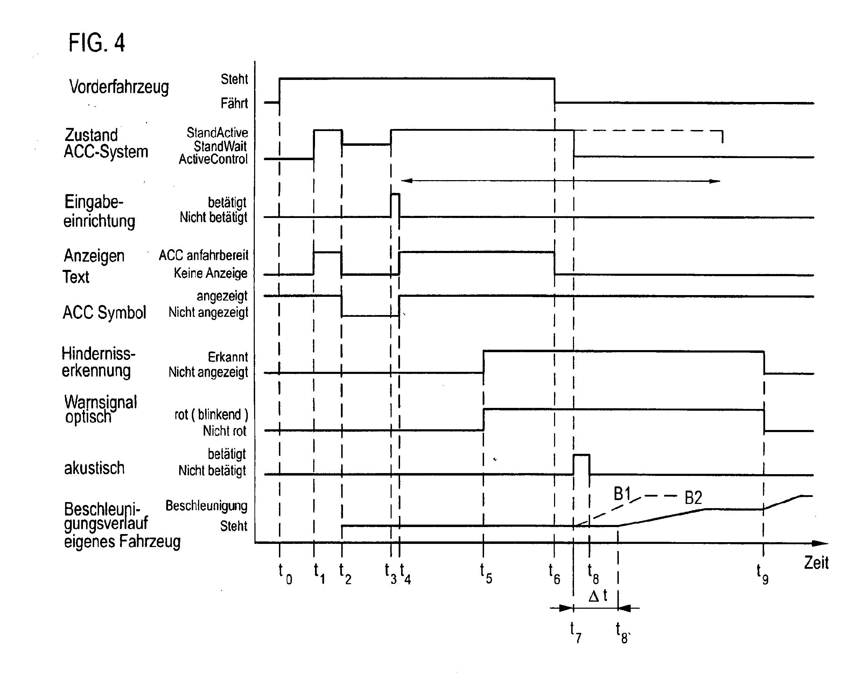

Fig. 4 zeigt einen dem Verfahrensablauf aus Fig. 3 entsprechenden Verfahrensablauf, jedoch wird hier zum einen unmittelbar mit Erfassen eines Hindernisses im Zeitpunkt t₅ auch das optische Warnsignal ausgegeben, obwohl zu diesem Zeitpunkt das Anfahren des Vorderfahrzeugs 12 noch nicht erfasst wurde, dies ist erst im Folgezeitpunkt t₆ der Fall. Gleichwohl wird der Fahrer über einen sich nun im Fahrzeugvorfeld befindliches Hindernis sofort mit dessen Erfassung informiert. Sofern das Hindernis aus dem Fahrzeugvorfeldbereich vor dem Zeitpunkt t₇ wieder verschwindet, erlischt die optische Warnsignalgabe natürlich.

Gezeigt ist ferner ein Zeitintervalle Δt zwischen dem Zeitpunkt t₇, zu dem das ACC-System wieder in den aktiven Regelungszustand übergeht und zu dem zumindest das akustische Warnsignal gegeben wird, und dem Zeitpunkt t_{8'}, zu dem erst die Beschleunigung des eigenen Fahrzeugs gemäß der Kennlinie B2 erfolgt. Dieses Zeitintervalle Δt ist eine Wartezeit, bis zu welcher ab Übernahme der aktiven Längsregelung die tatsächliche Beschleunigung erfolgt. Innerhalb dieser Wartezeit wird zumindest das akustische Warnsignal gegeben, der Fahrer hat somit noch etwas mehr Zeit, das Hindernis zu erkennen und einzugreifen.

Abschließend ist festzuhalten, dass der automatische Anfahrbetrieb trotz Hinderniserkennung immer, also unabhängig von der Position bzw. des Abstands des erfassten Hindernisses zum eigenen Kraftfahrzeug erfolgen kann. Denkbar ist es aber auch, einen gegebenenfalls werk- oder fahrerseitig einstellbaren Mindestabstand zu definieren, den das Hindernis mindestens vom Fahrzeug entfernt sein muss, damit die automatische Anfahrt mit reduzierter Beschleunigung erfolgt. Dieser Abstand kann z.B. 0,5 m oder 1 m vom eigenen Kraftfahrzeug betragen. Das Fahrzeug fährt also nicht an, wenn sich das Hindernis näher als der Mindestabstand zum eigenen Fahrzeug befindet.

Denkbar wäre es ferner, im Falle einer Anfahrt trotz Hinderniserkennung bei der Wahl der hierbei zu Grunde liegenden reduzierten Beschleunigung auch den Abstand des erkannten Hindernisses zum eigenen Kraftfahrzeug zu berücksichtigen, also die Beschleunigung umso geringer zu wählen, je näher das Hindernis zum Kraftfahrzeug ist, um so die für den Fahrer gewonnenen Zeitspanne zum Treffen seiner Entscheidung möglichst lange auszudehnen.

## Patentansprüche

1. Verfahren zum Betrieb eines Kraftfahrzeugs (1) mit einem Längsführungssystem umfassend eine eine Nahbereichssensorik (7,8) sowie eine Fernbereichssensorik (6) aufweisende Sensorik, über die Gegenstände im Fahrzeugvorfeld erfassbar sind, wobei das Kraftfahrzeug über das Längsführungssystem (2) gesteuert in den Stand gebremst wird und bei Vorliegen wenigstens eines fahrerseitig zu gebenden Freigabesignals automatisch in Abhängigkeit des Erfassungsergebnisses anfährt, wobei das hinter einem über die Sensorik erfassten anderen Fahrzeug (12) stehende Kraftfahrzeug bei Erfassung einer Anfahrt des anderen Fahrzeugs trotz gleichzeitiger Erfassung eines weiteren im Fahrzeugvorfeld befindlichen Hindernisses (14,16,18) mit einer, verglichen mit der Beschleunigung bei einer Anfahrt mit hindernisfreiem Fahrzeugvorfeld, geringeren Beschleunigung ohne unmittelbar vorheriger fahrerseitiger Gabe eines diese Anfahrt freigebenden Anfahrsignals anfährt,
**dadurch gekennzeichnet,**
**dass** das automatische Anfahren unterdrückt wird, wenn die Nahbereichssensorik (7,8) defekt oder nicht einsatzbereit ist.

2. Verfahren nach Anspruch 1,
**dadurch gekennzeichnet, dass**
dass die Anfahrt nach erfolgter oder unter gleichzeitiger Gabe eines das Vorhandensein eines Hindernisses anzeigenden Warnsignals erfolgt.

3. Verfahren nach Anspruch 2,
**dadurch gekennzeichnet,**
**dass** als Warnsignal ein akustisches und/oder ein optisches Warnsignal gegeben wird.

4. Verfahren nach Anspruch 2 oder 3,
**dadurch gekennzeichnet,**
**dass** das oder ein, insbesondere das optische Warnsignal solange auch nach erfolgter Anfahrt gegeben wird, bis das Hindernis nicht mehr von der Sensorik erfasst wird.

5. Verfahren nach einem der vorangehenden Ansprüche,
**dadurch gekennzeichnet,**
**dass** das Kraftfahrzeug unmittelbar nach Ablauf einer auch bei Anfahrt mit hindernisfreiem Fahrzeugvorfeld geltenden Wartezeit anfährt.

6. Verfahren nach einem der Ansprüche 1 bis 4,
**dadurch gekennzeichnet,**
**dass** das Kraftfahrzeug erst nach Ablauf einer weiteren die bei Anfahrt mit hindernisfreiem Fahrzeugvorfeld geltende Wartezeit verlängernden Zusatzwartezeit anfährt.

7. Verfahren nach einem der vorangehenden Ansprüche,
**dadurch gekennzeichnet,**
**dass** das Freigabesignal eine Gültigkeitsdauer von wenigstens 15s, insbesondere von wenigstens 20s besitzt.

8. Verfahren nach einem der vorangehenden Ansprüche,
**dadurch gekennzeichnet,**
**dass** unabhängig von der Erfassung einer Anfahrt des vor dem eigenen Kraftfahrzeug stehenden Fahrzeugs bei Erfassung eines Hindernisses stets ein Warnsignal ausgegeben wird.

9. Kraftfahrzeug (1) geeignet zur Durchführung des Verfahrens nach einem der vorangehenden Ansprüche, mit einem Längsführungssystem (2) umfassend eine Steuerungseinrichtung (3) und eine eine Nahbereichssensorik (7, 8) sowie eine Fernbereichssensorik (6) aufweisende Sensorik, über die Gegenstände im Fahrzeugvorfeld erfassbar sind, wobei das Kraftfahrzeug (1) über das Längsführungssystem (2) gesteuert in den Stand gebremst wird und bei Vorliegen wenigstens eines fahrerseitig zu gebenden Freigabesignals automatisch in Abhängigkeit des Erfassungsergebnisses anfährt, wobei die Steuerungseinrichtung (3) zur Steuerung der Anfahrt des Kraftfahrzeugs (1) derart ausgebildet ist, dass das hinter einem über die Sensorik (6, 7, 8) erfassten anderen Fahrzeug (12) stehende Kraftfahrzeug (1) bei Erfassung einer Anfahrt des anderen Fahrzeugs trotz gleichzeitiger Erfassung eines weiteren im Fahrzeugvorfeld befindlichen Hindernisses (14, 16, 18) mit einer, verglichen mit der Beschleunigung (B1) bei einer Anfahrt mit hindernisfreiem Fahrzeugvorfeld, geringeren Beschleunigung (B2) ohne unmittelbar vorheriger fahrerseitiger Gabe eines diese Anfahrt freigebenden Anfahrsignals anfährt,
**dadurch gekennzeichnet,**
**dass** das automatische Anfahren unterdrückt ist, wenn die Nahbereichssensorik (7, 8) defekt oder nicht einsatzbereit ist.

10. Kraftfahrzeug nach Anspruch 9,
**dadurch gekennzeichnet,**
**dass** wenigstens eine über die Steuerungseinrichtung (3) gesteuerte Signalgabeeinrichtung (10, 11) zur Gabe eines Warnsignals vorgesehen ist, wobei die Steuerungseinrichtung (3) derart ausgebildet ist, dass die Anfahrt nach erfolgter oder unter gleichzeitiger Gabe eines das Vorhandensein eines Hindernisses (14, 16, 18) anzeigenden Warnsignals erfolgt.

11. Kraftfahrzeug nach Anspruch 10,
**dadurch gekennzeichnet,**
**dass** als Signalgabeeinrichtung eine optische Einrichtung (10) und/oder eine akustische Einrichtung (11) vorgesehen ist.

12. Kraftfahrzeug nach einem der Ansprüche 9 bis 11,
**dadurch gekennzeichnet,**
**dass** die Steuerungseinrichtung (3) zur Durchführung der Anfahrt unmittelbar nach Ablauf einer auch bei Anfahrt mit hindernisfreiem Fahrzeugvorfeld geltenden Wartezeit oder erst nach Ablauf einer weiteren die bei Anfahrt mit hindernisfreiem Fahrzeugvorfeld geltende Wartezeit verlängernden Zusatzwartezeit (Δt) ausgebildet ist.

13. Kraftfahrzeug nach einem der Ansprüche 9 bis 12,
**dadurch gekennzeichnet,**
**dass** das Freigabesignal eine Gültigkeitsdauer von wenigstens 15s, insbesondere von wenigstens 20s besitzt.

## Claims

1. Method for operating a motor vehicle (1) using a longitudinal guiding system which comprises a sensor system which has both a short-range sensor system (7, 8) and a long-range sensor system (6) and which is used to detect objects in the region in front of the vehicle, the motor vehicle being braked to a standstill in a manner controlled by the longitudinal guiding system (2) and automatically moving off, depending on the result of the detection, when at least one enabling signal to be issued by the driver is provided, the motor vehicle, which is behind another vehicle (12) detected by the sensor system, moving off when the other vehicle is detected moving off, despite the simultaneous detection of an additional obstruction (14, 16, 18) located in the region in front of the vehicle, at an acceleration which is slower than the acceleration during moving off when there are no obstructions in the region in front of the vehicle, and without the driver immediately beforehand issuing a moving-off signal which enables this moving off, **characterised in that** automatic moving off is disabled if the short-range sensor system (7, 8) is faulty or not operational.

2. Method according to claim 1, **characterised in that** the vehicle moves off either after a warning signal indicating the presence of an obstruction is issued or at the same time as said signal is issued.

3. Method according to claim 2, **characterised in that** the warning signal issued is an acoustic and/or a visual warning signal.

4. Method according to either claim 2 or claim 3, **characterised in that** the or a, in particular the, visual warning signal is also issued after the vehicle has moved off until the sensor system no longer detects the obstruction.

5. Method according to any of the preceding claims, **characterised in that** the motor vehicle moves off immediately after a waiting time, which is also applicable during moving off when there are no obstructions in the region in front of the vehicle.

6. Method according to any of claims 1 to 4, **characterised in that** the motor vehicle moves off after a further additional waiting time, which increases the waiting time applicable during moving off when there are no obstructions in the region in front of the vehicle.

7. Method according to any of the preceding claims, **characterised in that** the enabling signal is effective for at least 15 s, in particular for at least 20 s.

8. Method according to any of the preceding claims, **characterised in that** a warning signal is always issued when an obstruction is detected, irrespective of whether it has been detected that the vehicle in front of the motor vehicle has moved off.

9. Motor vehicle (1) suitable for carrying out the method according to any of the preceding claims, comprising a longitudinal guiding system (2) which comprises a control device (3) which has both a short-range sensor system (7, 8) and a long-range sensor system (6) and which is used to detect objects in the region in front of the vehicle, the motor vehicle (1) being braked to a standstill in a manner controlled by the longitudinal guiding system (2) and automatically moving off, depending on the result of the detection, when at least one enabling signal to be issued by the driver is provided, the control device (3) for controlling moving off of the motor vehicle (1) being designed such that the motor vehicle (1), which is behind another vehicle (12) detected by the sensor system (6, 7, 8), moves off when the other vehicle is detected moving off, despite the simultaneous detection of an additional obstruction (14, 16, 18) located in the region in front of the vehicle, at a slower acceleration (B2) than the acceleration (B1) during moving off when there are no obstructions in the region in front of the vehicle, and without the driver immediately beforehand issuing a moving-off signal which enables this moving off, **characterised in that** automatic moving off is disabled if the short-range sensor system (7, 8) is faulty or not operational.

10. Motor vehicle according to claim 9, **characterised in that** at least one signal issuing device (10, 11) controlled by the control device (3) is provided for issuing a warning signal, the control device (3) being designed such that the vehicle moves off either after a warning signal indicating the presence of an obstruction (14, 16, 18) is issued or at the same time as said signal is issued.

11. Motor vehicle according to claim 10, **characterised in that** a visual device (10) and/or an acoustic device (11) is provided as the signal issuing device.

12. Motor vehicle according to any of claims 9 to 11, **characterised in that** the control device (3) is designed to implement moving off immediately after a waiting time, which is also applicable during moving off with no obstructions in front of the vehicle, or only after a further additional waiting time (Δt), which increases the waiting time applicable during moving off with no obstructions in front of the vehicle.

13. Motor vehicle according to any of claims 9 to 12, **characterised in that** the enabling signal is effective for at least 15 s, in particular for at least 20 s.

## Revendications

1. Procédé de fonctionnement d'un véhicule automobile (1) avec un système de guidage longitudinal comprenant un ensemble de détection présentant un ensemble de détection de proximité (7, 8) ainsi qu'un ensemble de détection à distance (6), par lesquels les objets à l'avant-plan du véhicule peuvent être détectés, dans lequel le véhicule automobile commandé via le système de guidage longitudinal (2) est freiné en l'état et, en présence d'au moins un signal de libération à délivrer par le conducteur, démarre automatiquement en fonction du résultat de la détection, dans lequel le véhicule automobile, qui se trouve derrière un autre véhicule (12) détecté par l'ensemble de détection, démarre lors de la détection du démarrage de l'autre véhicule, en dépit de la détection simultanée d'un autre obstacle (14, 16, 18) se trouvant à l'avant-plan du véhicule, avec une accélération plus petite en comparaison de l'accélération lors d'un démarrage avec un avant-plan du véhicule sans obstacles, sans que le conducteur ne délivre préalablement directement un signal de démarrage libérant ce démarrage,
**caractérisé en ce que** :
le démarrage automatique est supprimé lorsque l'ensemble de détection de proximité (7, 8) est défectueux ou n'est pas prêt à l'emploi.

2. Procédé selon la revendication 1,
**caractérisé en ce que** :
le démarrage se fait après délivrance réussie ou sous délivrance simultanée d'un signal d'avertissement indiquant la présence d'un obstacle.

3. Procédé selon la revendication 2,
**caractérisé en ce que** :
l'on délivre comme signal d'avertissement un signal d'avertissement acoustique et/ou optique.

4. Procédé selon la revendication 2 ou la revendication 3,
**caractérisé en ce que** :
le ou un signal d'avertissement, en particulier le signal d'avertissement optique, est délivré également après un démarrage réussi aussi longtemps que l'obstacle n'est plus détecté par l'ensemble de détection.

5. Procédé selon l'une quelconque des revendications précédentes,
**caractérisé en ce que** :
le véhicule automobile démarre directement après écoulement d'une période d'attente qui est également valable lors d'un démarrage avec un avant-plan du véhicule sans obstacles.

6. Procédé selon l'une quelconque des revendications 1 à 4,
**caractérisé en ce que** :
le véhicule automobile ne démarre qu'après écoulement d'une autre période d'attente supplémentaire prolongeant la période d'attente valable lors d'un démarrage avec un avant-plan du véhicule sans obstacles.

7. Procédé selon l'une quelconque des revendications précédentes,
**caractérisé en ce que** :
le signal de libération a une durée de validité d'au moins 15 s, en particulier d'au moins 20 s.

8. Procédé selon l'une quelconque des revendications précédentes,
**caractérisé en ce que** :
indépendamment de la détection d'un démarrage du véhicule qui se trouve devant le véhicule automobile proprement dit, lors de la détection d'un obstacle, un signal d'avertissement est toujours délivré.

9. Véhicule automobile (1) convenant pour la réalisation du procédé selon l'une quelconque des revendications précédentes, comprenant un système de guidage longitudinal (2) comprenant un dispositif de commande (3) et un ensemble de détection présentant un ensemble de détection de proximité (7, 8) ainsi qu'un ensemble de détection à distance (6), par lesquels les objets peuvent être détectés à l'avant-plan du véhicule, dans lequel le véhicule automobile (1) commandé via le système de guidage longitudinal (2) est freiné en l'état et, lors de la délivrance d'au moins un signal de libération par le conducteur, démarre automatiquement en fonction du résultat de la détection, dans lequel le dispositif de commande (3) permettant de commander le démarrage du véhicule automobile (1) est conçu de manière que le véhicule automobile (1) qui se trouve derrière un autre véhicule (12) détecté par les ensembles de détection (6, 7, 8), démarre, lors de la détection d'un démarrage de l'autre véhicule, en dépit de la détection simultanée d'un autre obstacle (14, 16, 18) se trouvant à l'avant-plan du véhicule, avec une accélération (B2) plus petite en comparaison de l'accélération (B1) lors d'un démarrage avec un avant-plan du véhicule sans obstacles sans délivrance préalable et directe par le conducteur d'un signal de démarrage libérant ce démarrage,
**caractérisé en ce que** :
le démarrage automatique est supprimé lorsque l'ensemble de détection de proximité (7, 8) est défectueux ou n'est pas prêt à l'emploi.

10. Véhicule automobile selon la revendication 9, **caractérisé en ce que** :
il est prévu au moins un dispositif de délivrance de signal (10, 11) commandé via le dispositif de commande (3) pour délivrer un signal d'avertissement, dans lequel le dispositif de commande (3) est conçu de manière que le démarrage se fasse après une délivrance réussie ou sous délivrance simultanée d'un signal d'avertissement indiquant la présence d'un obstacle (14, 16, 18).

11. Véhicule automobile selon la revendication 10, **caractérisé en ce que** :
il est prévu comme dispositif de délivrance de signal un dispositif optique (10) et/ou un dispositif acoustique (11).

12. Véhicule automobile selon l'une quelconque des revendications 9 à 11,
**caractérisé en ce que** :
le dispositif de commande (3) est conçu pour assurer le démarrage directement après l'écoulement d'une période d'attente valable même lors d'un démarrage avec un avant-plan du véhicule sans obstacles ou seulement après écoulement d'une autre période d'attente supplémentaire (Δt) se prolongeant lors du démarrage par une période d'attente valable avec un avant-plan du véhicule sans obstacles.

13. Véhicule automobile selon l'une quelconque des revendications 9 à 12,
**caractérisé en ce que** .
le signal de libération a une durée de validité d'au moins 15 s, en particulier d'au moins 20 s.
